# EUROPEAN PATENT SPECIFICATION

(11) **EP 3 839 325 B1**
(45) Date of publication and mention of the grant of the patent: **06.05.2026**
(21) Application number: 19425093.2
(22) Date of filing: 18.12.2019
(51) Int. Cl.: F21S 41/148, F21S 41/20, F21S 41/50, F21S 43/20, F21S 43/50

(54) **AUTOMOTIVE LIGHTING AND/OR SIGNALING DEVICE**
BELEUCHTUNGS- UND/ODER SIGNALISIERUNGSVORRICHTUNG FÜR KRAFTFAHRZEUGE
DISPOSITIF D'ÉCLAIRAGE ET/OU DE SIGNALISATION AUTOMOBILE

(43) Date of publication of application: 23.06.2021
(73) Proprietor: Marelli Automotive Lighting Italy S.p.A., 10078 Venaria Reale (TO) (IT)
(72) Inventor: ZILIO, Pierfrancesco, I-33028 Tolmezzo, Udine (IT); TOLUSSO, Sandro, I-33028 Tolmezzo, Udine (IT); PARONI, Sara, I-33028 Tolmezzo, Udine (IT)
(74) Representative: Mitola, Marco

(56) References cited:
- EP-A1- 3 096 072
- WO-A1-2012/120441
- WO-A1-2014/135762
- FR-A1- 3 074 563
- FR-A1- 3 082 153
- US-A1- 2014 160 779

## Description

### FIELD OF APPLICATION

The present invention relates to an automotive lighting and/or signaling device.

### BACKGROUND ART

The term automotive lighting and/or signaling device is used herein in a very broad meaning, so as to comprise both a rear and a front automotive lamp, the latter also being called headlight or headlamp.

Therefore, a position light, a direction indicator light, a stop light, a rear fog light, a reversing light, a dipped-beam headlamp, a high-beam headlamp and the like, are included.

Furthermore, the term is also meant to comprise a map light, a light for a dashboard or part thereof; therefore, the automotive lighting and/or signaling device may be located both inside and outside the vehicle.

As known, said automotive lighting and/or signaling devices may be used both for lighting and for sending visual signals.

To this end, said devices comprise a plurality of illuminating portions having different colors, different levels of brightness (also according to regulations to be complied with) and the like.

In particular, in recent years, lighting and/or signaling devices have increasingly acquired an aesthetic value as well as a photometric function. In other words, apart from, of course, the lighting and/or signaling function which they must carry out, said lighting and/or signaling devices are increasingly used as design elements within the context of the vehicle in which they are inserted.

To this end, providing lighting and/or signaling devices which have illuminating portions having particular drawings and/or geometries and/or writings or symbols, as required by vehicle manufacturers, is known.

To obtain automotive lighting and/or signaling devices which satisfy such requests, providing devices with multiple luminous sources and multiple lenticular bodies equipped with masks and colored portions is known. The colored portions have the function of carrying out both photometric functions as well as aesthetic functions; the masks are used to conceal the presence of the internal components of the lamp from the outside and to delimit the different lighting areas which are to be obtained.

Such solutions imply the realization of many components of the lamp which must be suitably assembled together: the result is a lighting and/or signaling device which is expensive and complex to make, as well as relatively heavy and bulky. US 2014/160779 A1 describes a lighting device of the prior art.

### PRESENTATION OF THE INVENTION

The need is therefore felt in the background art to provide an automotive lighting and/or signaling device which allows to obtain the above mentioned technical effects, with an excellent aesthetic result, both in terms of precision of the illuminating portions as well as in terms of lighting homogeneity, without implying excessive construction and assembly costs, and limiting weight and size.

Such requirement is met by an automotive lighting and/or signaling device in accordance with claim 1.

Other embodiments of the present invention are described in the dependent claims.

### DESCRIPTION OF THE DRAWINGS

Further features and advantages of the present invention will become more apparent from the following description of preferred and non-limitative embodiments thereof, in which:

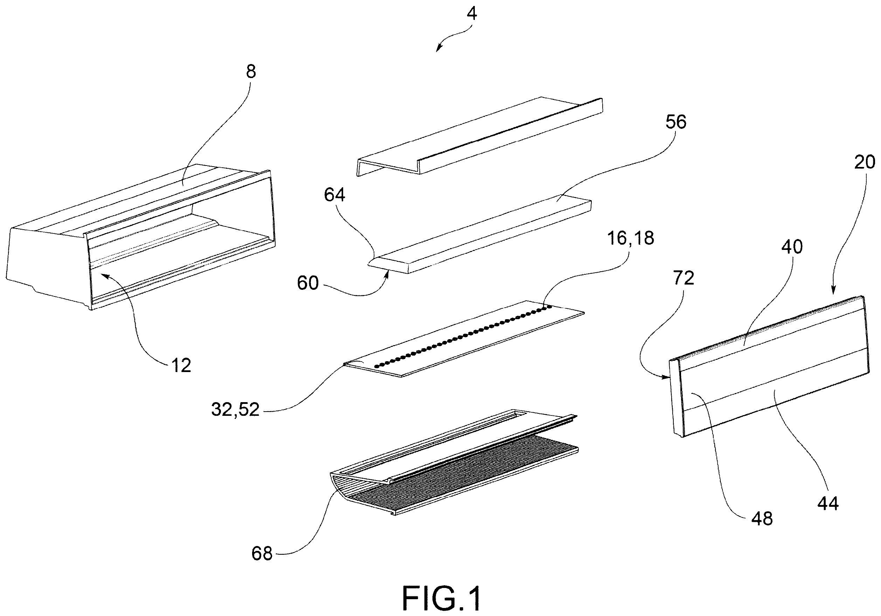

Figure 1 shows a perspective view, with separate parts, of a lighting and/or signaling device according to an embodiment of the present invention;
Figure 2 shows a sectional perspective view, with separate parts, of the lighting and/or signaling device of Figure 1;
Figure 3 shows a perspective view, with separate parts, of a lighting and/or signaling device according to a further embodiment of the present invention;
Figure 4 shows a sectional view, in an assembled configuration, of the lighting and/or signaling device of Figure 3.

The common elements or parts of elements between the embodiments described below will be indicated with the same reference numerals.

### DETAILED DESCRIPTION

With reference to the aforesaid figures, reference numeral 4 generally indicates a lighting and/or signaling device, such as an automotive lamp, to which the following description will refer without this implying any loss of generality.

As mentioned above, the term lighting and/or signaling device indifferently means an automotive rear lamp or an automotive front lamp, the latter also called headlight or headlamp, comprising an external vehicle light having a lighting and/or signaling function, such as, for example, a position light, which may be a front, rear, side position light, a direction indicator light, a stop light, a rear fog light, a high-beam headlamp, a dipped-beam headlamp and the like.

Furthermore, the term lighting and/or signaling device also means an inside map light, a light for a dashboard or part thereof, a display and so on.

Therefore, as better described below, in the signaling function thereof, the device may comprise the possibility of sending luminous signals, logos, but also luminous messages and writings of any kind.

The lighting and/or signaling device 4 comprises a container body or housing 8, usually made of a polymeric material, which conventionally allows the lighting and/or signaling device 4 to be fastened to the relative vehicle or to any type of support.

For the purposes of the present invention, the container body or housing 8 may have any shape and size, as well as positioning: for example, the container body 8 may not be directly associated with the bodywork or other external fixings of the associated vehicle.

As seen, the container body 8 may also be internally associated with the vehicle, for example, on the instrument panel, on the dashboard, on the parcel shelf and so on.

The container body 8 delimits a containment seat 12 which houses a plurality of components of said lighting and/or signaling device.

In particular, the containment seat 12 houses a plurality of luminous sources 16, preferably LED luminous sources or laser luminous sources, arranged and supported inside said containment seat 12.

For example, a lenticular body 20 may be associated with the container body 8, as an at least partial closure, so as to close said containment seat 12 which houses the at least one luminous source 16.

For the purposes of the present invention, the lenticular body 20 may be external to the lighting and/or signaling device 4, so as to define at least one external wall of the lighting and/or signaling device directly subject to the atmosphere.

According to possible embodiments, the material of the lenticular body 20 is a resin such as PMMA (Polymethyl methacrylate), PC (polycarbonate) and the like.

The lenticular body 20 closes the containment seat 12 and is adapted to be at least partially crossed by the luminous beam produced by the luminous sources 16, which is transmitted outside the containment seat 12, as better described below.

In this regard, the lenticular body 20 is made of an at least partially transparent or semitransparent or translucent material, which may also comprise one or more opaque portions, so as to allow, in any case, the at least partial crossing of the luminous beam produced by the luminous source.

More in particular, the containment seat 12 houses a first luminous source 18 adapted to emit a first luminous beam, and a second luminous source 19 adapted to emit a second luminous beam.

Advantageously, the containment seat 12 is divided into a first compartment 24 which houses the first luminous source 18 and into a second compartment 28 which houses the second luminous source 19.

Said first compartment 24 and second compartment 28 are separated by at least one separation wall 32; said separation wall is preferably opaque to the luminous beams produced by the luminous sources 16, 18, 19.

Advantageously, the lenticular body 20 comprises a first transmission portion 40, facing the first compartment 24 and configured to transmit, at least partially, the first luminous beam towards the outside.

The lenticular body 20 comprises a second transmission portion 44 facing the second compartment 28 and configured to transmit, at least partially, the second luminous beam towards the outside.

The lenticular body 20 further comprises an opaque portion 48, interposed between said first transmission portion 40 and second transmission portion 44, so as to conceal the view of said first and second luminous sources 16, 18, 19 from the outside.

According to an embodiment, the first transmission portion 40 and/or the second transmission portion 44 are transparent, semitransparent or translucent or opaline portions.

Preferably, the first luminous source 18 and second luminous source 19 are associated with opposite faces of the same printed circuit 52.

It should be noted that the distinction between the first and second luminous source, and therefore between the first and second compartment, is purely indicative: the first luminous source 18 may be positioned both above as well as below the second luminous source. The same applies, of course, to the first and second compartments.

According to an embodiment, said printed circuit 52 is positioned near said separation wall 32, between the first compartment 24 and the second compartment 28.

According to an embodiment, the printed circuit 52 itself forms, at least partially, said separation wall 32.

The opaque portion 48 faces the printed circuit 52 and/or the separation wall, so as to conceal the view of the printed circuit 52, of the separation wall 32 and/or of the luminous sources 16, 18, 19 from the outside.

According to a possible embodiment, a light guide 56, which transmits the first luminous beam towards the first transmission portion 40, is associated with the first luminous source 18.

More in detail, in an embodiment, said light guide 56 comprises a light inlet wall 60 substantially perpendicular to a first prevalent emission direction X'-X' of the first luminous beam. Furthermore, the light guide 56 comprises a reflection wall 64 which deflects the first luminous beam in a first prevalent propagation direction Y'-Y' perpendicular to the first prevalent emission direction X'-X' and to the first transmission portion 40.

Preferably, in said embodiment, the first transmission portion 40 is made of a transparent material.

According to a possible embodiment, at least one reflector 68, which reflects the second luminous beam towards the second transmission portion 44, faces the second luminous source 19.

The reflector 68 receiving the second luminous beam in a second prevalent emission direction X"-X" and deflects it in a second prevalent propagation direction Y"-Y" substantially perpendicular to the second transmission portion 44.

Preferably, in said embodiment, the second transmission portion 44 is made of an opaline material, which may, for example, be co-molded with the first transmission portion 40.

Preferably, said reflector 68 at least partially forms said separation wall 32.

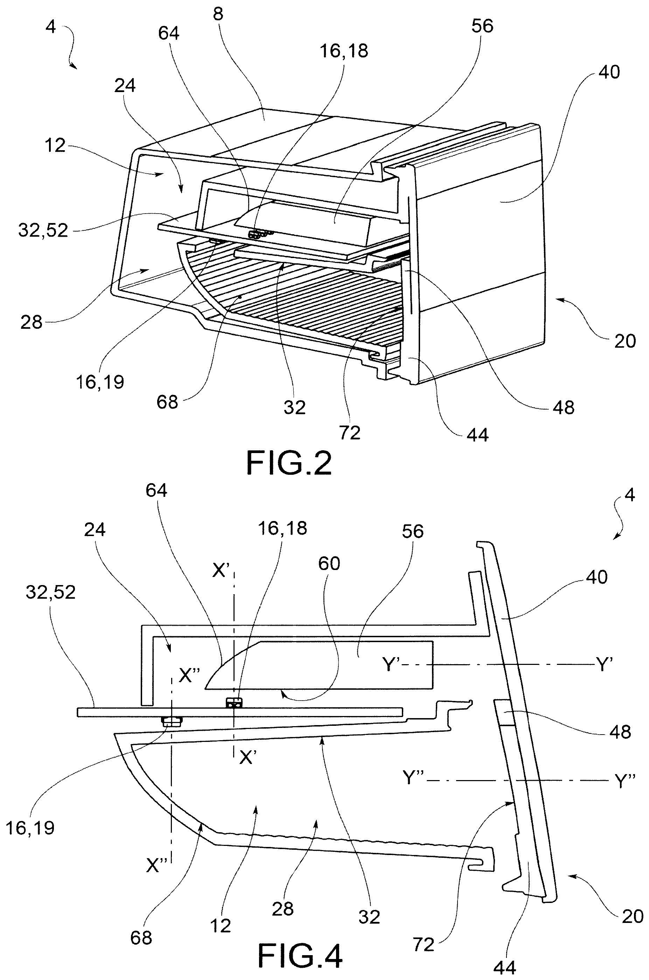

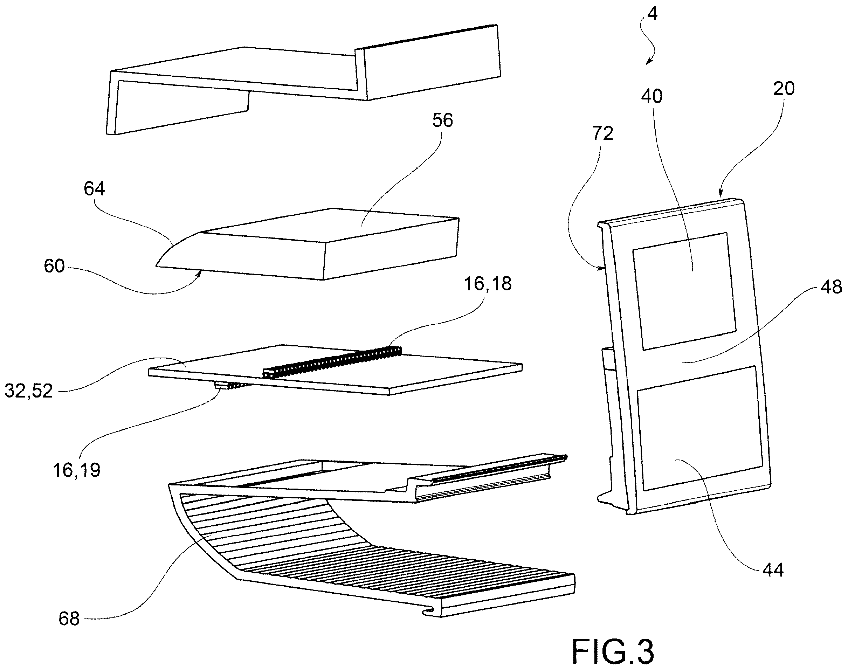

According to an embodiment (Figures 3-4), the lenticular body 20 comprises a first transmission portion 40 which extends to close the first compartment 24 and the second compartment 28, in which the second transmission portion 44 is opaline; furthermore, the opaline second transmission portion 44 and the opaque portion 48 are associated (for example, co-molded) with the first transmission portion 40 on an internal side 72 of the lenticular body 20 facing said first compartment 24 and second compartment 28. In other words, the opaline second transmission portion 44 and the opaque portion 48 are positioned so as to be facing the container body 8.

As it may be appreciated from the foregoing, the present invention allows to overcome the drawbacks presented in the background art.

In particular, the automotive lighting and/or signaling device in accordance with the present invention allows to use a single lens or an external lenticular body to diffuse/homogenize/mask the light and/or the luminous sources contained inside the container body of the lighting device, unlike the known solutions which provide for the use of multiple devices for diffusing and/or masking the light and the luminous sources.

Thereby, benefits are obtained in terms of assembly, costs and size of the lighting device. In fact, it is possible to realize and assemble a single lenticular body which carries out said functions at once.

Reducing the overall number of components means reducing not only assembly times and costs, but also the weight and the size of the final assembly.

In order to meet contingent and specific needs, several changes and variations to the lighting and/or signaling devices described above may be introduced by those skilled in the art without departing from the scope of the invention as defined by the following claims.

## Claims

1. An automotive lighting and/or signaling device (4) comprising:
- a container body (8) which delimits a containment seat (12) closed by a lenticular body (20),
- said containment seat 12 housing a first luminous source (18) adapted to emit a first luminous beam, and a second luminous source (19) adapted to emit a second luminous beam,
- said containment seat (12) being closed by a lenticular body (20) adapted to be at least partially crossed by the luminous beams produced by said luminous sources (18, 19), so as to transmit said luminous beams outside of the containment seat (12),
wherein
- the containment seat (12) is divided into a first compartment (24) which houses the first luminous source (18) and a second compartment (28) which houses the second luminous source (19),
- said first compartment (24) and second compartment (28) being separated by at least one separation wall (32),
- wherein the lenticular body (20) comprises:
- a first transmission portion (40), facing the first compartment (24) and configured to transmit, at least partially, the first luminous beam towards the outside,
- a second transmission portion (44), facing the second compartment (28) and configured to transmit, at least partially, the second luminous beam towards the outside,
wherein the lenticular body (20) comprises:
- an opaque portion (48), interposed between said first transmission portion (40) and second transmission portion (44), so as to conceal the view of said first luminous source (18) and second luminous source (19) from the outside,
**characterized in that**, the second transmission portion (44) is made of an opaline material and is co-molded with the first transmission portion (40).

2. An automotive lighting and/or signaling device (4) according to claim 1, wherein the first transmission portion (40) is a transparent, semitransparent, translucent or opaline portion.

3. An automotive lighting and/or signaling device (4) according to claim 1 or 2, wherein said first luminous source (18) and second luminous source (19) are associated with opposite faces of a same printed circuit (52).

4. An automotive lighting and/or signaling device (4) according to claim 3, wherein said printed circuit (52) is positioned near said separation wall (32) between the first compartment (24) and the second compartment (28).

5. An automotive lighting and/or signaling device (4) according to claim 3 or 4, wherein said printed circuit (52) itself forms, at least partially, said separation wall (32).

6. An automotive lighting and/or signaling device (4) according to claim 3, 4 or 5, wherein the opaque portion (48) faces the printed circuit (52) and/or the separation wall (32), so as to conceal the view of the printed circuit (52), of the separation wall (32) and/or of the luminous sources (18, 19) from the outside.

7. An automotive lighting and/or signaling device (4) according to any one of claims 1 to 6, wherein a light guide (56), which transmits the first luminous beam towards the first transmission portion (40), is associated with the first luminous source (18).

8. An automotive lighting and/or signaling device (4) according to claim 7, wherein said light guide (56) comprises a light inlet wall (60) substantially perpendicular to a first prevalent emission direction (X'-X') of the first luminous beam, a reflection wall (64) which deflects the first luminous beam in a first prevalent propagation direction (Y'-Y') perpendicular to the first prevalent emission direction (X'-X') and to the first transmission portion (40).

9. An automotive lighting and/or signaling device (4) according to claim 8, wherein said first transmission portion (40) is transparent.

10. An automotive lighting and/or signaling device (4) according to any one of claims 1 to 9, wherein at least one reflector (68), which reflects the second luminous beam towards the second transmission portion (44), faces the second luminous source (19).

11. An automotive lighting and/or signaling device (4) according to claim 10, wherein the reflector (68) receives the second luminous beam in a second prevalent emission direction (X"-X") and deflects it in a second prevalent propagation direction (Y"-Y") substantially perpendicular to the second transmission portion (44).

12. An automotive lighting and/or signaling device (4) according to claim 11, wherein said second transmission portion (44) is opaline.

13. An automotive lighting and/or signaling device (4) according to claim 10, 11 or 12, wherein said reflector (68) at least partially forms said separation wall (32) between the first compartment (24) and the second compartment (28).

14. An automotive lighting and/or signaling device (4) according to any one of the preceding claims, wherein the lenticular body (20) comprises a first transmission portion (40), which extends to close the first compartment (24) and the second compartment (28), wherein the second transmission portion (44) is opaline, and wherein the opaline second transmission portion (44) and the opaque portion (48) are associated with the first transmission portion (40) on an internal side (72) of the lenticular body (20) facing said first compartment (24) and second compartment (28).

15. An automotive lighting and/or signaling device (4) according to claim 14, wherein the second transmission portion (44) and/or the opaque portion (48) are co-molded with the first transmission portion (40).

16. An automotive lighting and/or signaling device (4) according to any one of the preceding claims, wherein said first luminous source (18) and/or second luminous source (19) are LED or laser luminous sources.

## Patentansprüche

1. Beleuchtungs- und/oder Signalisierungsvorrichtung für Kraftfahrzeuge (4), umfassend:
- einen Behälterkörper (8), der einen Aufnahmesitz (12) begrenzt, der durch einen Linsenkörper (20) geschlossen wird,
- wobei der Aufnahmesitz (12) eine erste Lichtquelle (18) aufnimmt, die eingerichtet ist, einen ersten Lichtstrahl zu emittieren, und eine zweite Lichtquelle (19), die eingerichtet ist, einen zweiten Lichtstrahl zu emittieren,
- wobei der Aufnahmesitz (12) durch einen Linsenkörper (20) geschlossen wird, der eingerichtet ist, mindestens teilweise von den Lichtstrahlen, die von den Lichtquellen (18, 19) erzeugt werden, gekreuzt zu werden, um die Lichtstrahlen aus dem Aufnahmesitz (12) nach außen zu übertragen,
wobei
- der Aufnahmesitz (12) in einem ersten Fach (24), das die erste Lichtquelle (18) aufnimmt, und einem zweiten Fach (28), das die zweite Lichtquelle (19) aufnimmt, unterteilt wird,
- das erste Fach (24) und das zweite Fach (28) durch mindestens eine Trennwand (32) getrennt sind,
- wobei der Linsenkörper (20) umfasst:
- einen ersten Übertragungsabschnitt (40), der dem ersten Fach (24) zugewandt ist und dazu konfiguriert ist, den ersten Lichtstrahl mindestens teilweise nach außen zu übertragen,
- einen zweiten Übertragungsabschnitt (44), der dem zweiten Fach (28) zugewandt ist und dazu konfiguriert ist, den zweiten Lichtstrahl mindestens teilweise nach außen zu übertragen,
wobei der Linsenkörper (20) umfasst:
- einen undurchsichtigen Abschnitt (48), der zwischen dem ersten Übertragungsabschnitt (40) und dem zweiten Übertragungsabschnitt (44) angeordnet ist, um die Sicht auf die erste Lichtquelle (18) und die zweite Lichtquelle (19) von außen zu verdecken,
**dadurch gekennzeichnet, dass**
der zweite Übertragungsabschnitt (44) aus einem opalartigen Material hergestellt wird und mit dem ersten Übertragungsabschnitt (40) mitformgepresst wird

2. Beleuchtungs- und/oder Signalisierungsvorrichtung für Kraftfahrzeuge (4) nach Anspruch 1, wobei der erste Übertragungsabschnitt (40) ein durchsichtiger, ein halbdurchsichtiger oder ein opalartiger Abschnitt ist.

3. Beleuchtungs- und/oder Signalisierungsvorrichtung für Kraftfahrzeuge (4) nach Anspruch 1 oder 2, wobei die erste Lichtquelle (18) und die zweite Lichtquelle (19) gegenüberliegenden Seiten einer gleichen Leiterplatte (52) zugeordnet sind.

4. Beleuchtungs- und/oder Signalisierungsvorrichtung für Kraftfahrzeuge (4) nach Anspruch 3, wobei die Leiterplatte (52) in der Nähe der Trennwand (32) zwischen dem ersten Fach (24) und dem zweiten Fach (28) angeordnet ist.

5. Beleuchtungs- und/oder Signalisierungsvorrichtung für Kraftfahrzeuge (4) nach Anspruch 3 oder 4, wobei die Leiterplatte (52) selbst mindestens teilweise die Trennwand (32) bildet.

6. Beleuchtungs- und/oder Signalisierungsvorrichtung für Kraftfahrzeuge (4) nach Anspruch 3, 4 oder 5, wobei der undurchsichtige Abschnitt (48) der Leiterplatte (52) und/oder der Trennwand (32) zugewandt ist, um die Sicht auf die Leiterplatte (52), auf die Trennwand (32) und/oder auf die Lichtquellen (18, 19) von außen zu verdecken.

7. Beleuchtungs- und/oder Signalisierungsvorrichtung für Kraftfahrzeuge (4) nach einem der Ansprüche 1 bis 6, wobei eine Lichtführung (56), der den ersten Lichtstrahl zu dem ersten Übertragungsabschnitt (40) überträgt, der ersten Lichtquelle (18) zugeordnet ist.

8. Beleuchtungs- und/oder Signalisierungsvorrichtung für Kraftfahrzeuge (4) nach Anspruch 7, wobei die Lichtführung (56) eine Lichteintrittswand (60) umfasst, die sich im Wesentlichen senkrecht zu einer ersten vorherrschenden Emissionsrichtung (X'-X') des ersten Lichtstrahls erstreckt, eine Reflexionswand (64), die den ersten Lichtstrahl in eine erste vorherrschende Ausbreitungsrichtung (Y'-Y') ablenkt, die sich senkrecht zu der ersten vorherrschenden Emissionsrichtung (X'-X') und zu dem ersten Übertragungsabschnitt (40) erstreckt.

9. Beleuchtungs- und/oder Signalisierungsvorrichtung für Kraftfahrzeuge (4) nach Anspruch 8, wobei der erste Übertragungsabschnitt (40) dursichtig ist.

10. Beleuchtungs- und/oder Signalisierungsvorrichtung für Kraftfahrzeuge (4) nach einem der Ansprüche 1 bis 9, wobei mindestens ein Reflektor (68), der den zweiten Lichtstrahl zu dem zweiten Übertragungsabschnitt (44) reflektiert, der zweiten Lichtquelle (19) zugewandt ist.

11. Beleuchtungs- und/oder Signalisierungsvorrichtung (4) nach Anspruch 10, wobei der Reflektor (68) den zweiten Lichtstrahl in einer zweiten vorherrschenden Emissionsrichtung (X"-X") empfängt und ihn in eine zweite vorherrschende Ausbreitungsrichtung (Y"-Y") ablenkt, die sich im Wesentlichen senkrecht zu dem zweiten Übertragungsabschnitt (44) erstreckt.

12. Beleuchtungs- und/oder Signalisierungsvorrichtung für Kraftfahrzeuge (4) nach Anspruch 11, wobei der zweite Übertragungsabschnitt (44) opalartig ausgebildet ist.

13. Beleuchtungs- und/oder Signalisierungsvorrichtung für Kraftfahrzeuge (4) nach Anspruch 10, 11 oder 12, wobei der Reflektor (68) mindestens teilweise die Trennwand (32) zwischen dem ersten Fach (24) und dem zweiten Fach (28) bildet.

14. Beleuchtungs- und/oder Signalisierungsvorrichtung für Kraftfahrzeuge (4) nach einem der vorhergehenden Ansprüche, wobei der Linsenkörper (20) einen ersten Übertragungsabschnitt (40) umfasst, der sich erstreckt, um das erste Fach (24) und das zweite Fach (28) zu schließen, wobei der zweite opalartige Übertragungsabschnitt (44), und der undurchsichtige Abschnitt (48) dem ersten Übertragungsabschnitt (40) auf einer inneren Seite (72) des Linsenkörpers (20) zugeordnet sind, die dem ersten Fach (24) und dem zweiten Fach (28) zugewandt ist.

15. Beleuchtungs- und/oder Signalisierungsvorrichtung für Kraftfahrzeuge (4) nach Anspruch 14, wobei der zweite Übertragungsabschnitt (44) und/oder der undurchsichtige Abschnitt (48) mit dem ersten Übertragungsabschnitt (40) mitformgepresst sind.

16. Beleuchtungs- und/oder Signalisierungsvorrichtung (4) nach einem der vorhergehenden Ansprüche, wobei die erste Lichtquelle (18) und/oder die zweite Lichtquelle (19) LED oder Laserlichtquellen sind.

## Revendications

1. Dispositif d'éclairage et/ou de signalisation automobile (4), comprenant :
- un corps de récipient (8) qui délimite un logement de confinement (12) fermé par un corps lenticulaire (20),
- ledit logement de confinement (12) abritant une première source lumineuse (18) adaptée à émettre un premier faisceau lumineux, et une seconde source lumineuse (19) adaptée à émettre un second faisceau lumineux,
- ledit logement de confinement (12) étant fermé par un corps lenticulaire (20) adapté à être au moins partiellement traversé par les faisceaux lumineux produits par lesdites sources lumineuses (18, 19), de manière à transmettre lesdits faisceaux lumineux à l'extérieur du logement de confinement (12),
dans lequel
- le logement de confinement (12) est subdivisé en un premier compartiment (24) qui abrite la première source lumineuse (18) et un second compartiment (28) qui abrite la seconde source lumineuse (19),
- ledit premier compartiment (24) et ledit second compartiment (28) étant séparés par au moins une paroi de séparation (32),
- dans lequel le corps lenticulaire (20) comprend :
- une première portion de transmission (40), en regard du premier compartiment (24) et configurée pour transmettre, au moins partiellement, le premier faisceau lumineux vers l'extérieur,
- une seconde portion de transmission (44), en regard du second compartiment (28) et configurée pour transmettre, au moins partiellement, le second faisceau lumineux vers l'extérieur,
dans lequel le corps lenticulaire (20) comprend :
- une portion opaque (48), interposée entre ladite première portion de transmission (40) et la seconde portion de transmission (44), de manière à dissimuler la vue de ladite première source lumineuse (18) et de la seconde source lumineuse (19) depuis l'extérieur,
**caractérisé en ce que**,
- la seconde portion de transmission (44) est réalisée en un matériau opalin et est co-moulée avec la première portion de transmission (40)

2. Dispositif d'éclairage et/ou de signalisation automobile (4) selon la revendication 1, dans lequel la première portion de transmission (40) est transparente, semi-transparente, translucide ou opaline

3. Dispositif d'éclairage et/ou de signalisation automobile (4) selon la revendication 1 ou 2, dans lequel ladite première source lumineuse (18) et la seconde source lumineuse (19) sont associées à des faces opposées d'un même circuit imprimé (52).

4. Dispositif d'éclairage et/ou de signalisation automobile (4) selon la revendication 3, dans lequel ledit circuit imprimé (52) est positionné à proximité de ladite paroi de séparation (32) entre le premier compartiment (24) et le second compartiment (28).

5. Dispositif d'éclairage et/ou de signalisation automobile (4) selon la revendication 3 ou 4, dans lequel ledit circuit imprimé (52) forme lui-même, au moins partiellement, ladite paroi de séparation (32).

6. Dispositif d'éclairage et/ou de signalisation automobile (4) selon la revendication 3, 4 ou 5, dans lequel la portion opaque (48) est en regard du circuit imprimé (52) et/ou de la paroi de séparation (32), de manière à dissimuler la vue du circuit imprimé (52), de la paroi de séparation (32) et/ou des sources lumineuses (18, 19) depuis l'extérieur.

7. Dispositif d'éclairage et/ou de signalisation automobile (4) selon l'une quelconque des revendications 1 à 6, dans lequel un guide de lumière (56), qui transmet le premier faisceau lumineux vers la première portion de transmission (40), est associé à la première source lumineuse (18).

8. Dispositif d'éclairage et/ou de signalisation automobile (4) selon la revendication 7, dans lequel ledit guide de lumière (56) comprend une paroi d'entrée de lumière (60) sensiblement perpendiculaire à une première direction d'émission prévalente (X'-X') du premier faisceau lumineux, une paroi de réflexion (64) qui dévie le premier faisceau lumineux selon une première direction de propagation prévalente (Y'-Y') perpendiculaire à la première direction d'émission prévalente (X'-X') et à la première portion de transmission (40).

9. Dispositif d'éclairage et/ou de signalisation automobile (4) selon la revendication 8, dans lequel ladite première portion de transmission (40) est transparente.

10. Dispositif d'éclairage et/ou de signalisation automobile (4) selon l'une quelconque des revendications 1 à 9, dans lequel au moins un réflecteur (68), qui réfléchit le second faisceau lumineux vers la seconde portion de transmission (44), est en regard de la seconde source lumineuse (19).

11. Dispositif d'éclairage et/ou de signalisation automobile (4) selon la revendication 10, dans lequel le réflecteur (68) reçoit le second faisceau lumineux selon une seconde direction d'émission prévalente (X"-X") et le dévie selon une seconde direction de propagation prévalente (Y"-Y") sensiblement perpendiculaire à la seconde portion de transmission (44).

12. Dispositif d' éclairage et/ou de signalisation automobile (4) selon la revendication 11, dans lequel ladite seconde portion de transmission (44) est opaline.

13. Dispositif d' éclairage et/ou de signalisation automobile (4) selon la revendication 10, 11 ou 12, dans lequel ledit réflecteur (68) forme au moins partiellement ladite paroi de séparation (32) entre le premier compartiment (24) et le second compartiment (28).

14. Dispositif d'éclairage et/ou de signalisation automobile (4) selon l'une quelconque des revendications précédentes, dans lequel le corps lenticulaire (20) comprend une première portion de transmission (40), qui s'étend pour fermer le premier compartiment (24) et le second compartiment (28), dans lequel la seconde portion de transmission (44) est opaline, et dans lequel la seconde portion de transmission opaline (44) et la portion opaque (48) sont associées à la première portion de transmission (40) sur un côté interne (72) du corps lenticulaire (20) faisant face audit premier compartiment (24) et audit second compartiment (28).

15. Dispositif d' éclairage et/ou de signalisation automobile (4) selon la revendication 14, dans lequel la seconde portion de transmission (44) et/ou la portion opaque (48) sont comoulées avec la première portion de transmission (40)

16. Dispositif d'éclairage et/ou de signalisation automobile (4) selon l'une quelconque des revendications précédentes, dans lequel ladite première source lumineuse (18) et/ou la seconde source lumineuse (19) sont des sources lumineuses à LED ou laser.
